# EUROPEAN PATENT APPLICATION

(11) **EP 3 741 494 A1**
(43) Date of publication of application: **25.11.2020**
(21) Application number: 19175832.5
(22) Date of filing: 22.05.2019
(51) Int. Cl.: B23K 26/06, B23K 26/082, B23K 26/352, B23K 26/36

(54) **A METHOD FOR MACHINING A WORKPIECE BY LASER ABLATION**

(71) Applicant: Agie Charmilles New Technologies SA, 1217 Meyrin 1 (CH)
(72) Inventor: Verhagen, Alex, 01630 Challex (FR)
(74) Representative: Fenner, Seraina

(57) **Abstract**

The present invention is directed to a method for machining a workpiece by laser ablation, in particular for engraving a texture on a surface of the workpiece. The surface of the workpiece includes at least one patch and the laser beam being controlled by a controller to ablate the patch line by line. The ablating order of the lines is selectable.

## Description

### FIELD OF THE INVENTION

The present invention relates to a laser ablation method. In further, the present invention is directed to a laser ablation machine.

### BACKGROUND OF THE INVENTION

Methods for ablation a surface of a workpiece using laser beams are well-known. The laser ablation machines are widely used for engraving a texture on a surface of a workpiece, and drilling holes in a workpiece. Such machine comprises a laser head for radiating a laser beam, a controller to control the movement of the laser head. In order to enable engraving complex textures, the laser head is capable of operating in at least three, in particular five mechanical axes.

For engraving the texture on the surface of the workpiece, a toolpath must be generated to control the laser head emitting the laser beam to engrave the surface. In known methods, the engraving toolpath is generated following a specific order defined by Computer Aids Design (CAD) environment. The laser beam is deflected thanks to a galvanometer system with X-axis and Y-axis mirrors and passes through a F-theta lens till it reaches the surface. The detailed structure of such laser machine is disclosed EP 2301706. EP2674238 A1 discloses a laser machine comprising at least one laser light source for generating a laser beam and an optical system to guide the laser beam.

The laser beam is controlled to ablate the surface typically in a subsequent order, e.g line by line. Two neighboring lines are ablated in subsequent order.

This subsequent order can generate non-desirable effects in the materials for several applications where the visual aspect is a crucial factor. These non-desirable visual effects occur because the light is not reflected homogeneously after hitting the surface. As the surface pattern was created in a specific manner, mentioned above, a succession of laser lines will create an overlap between the first and the subsequent line generating therefore a certain directionality in the surface and in the light reflected. Moreover, consecutive machining of closed toolpath vectors can lead to non-desirable thermal effects in the machined part.

Another disadvantage is related to the thermal effect. During ablation the surface is heated by laser beam. If two neighboring lines or neighboring areas are ablated in succession, the heat generated by ablating the previous line or area cannot be dissipated in the short time, therefore, the surface at this location can be negatively influenced by the thermal effect. This thermal effect can also lead to differences to the desired visual effect of the texture.

This is an important problem affecting our current products and it represents a limitation in variety of applications.

### SUMMARY OF THE INVENTION

It is an objective of this invention to provide an improved method for laser ablation, in which the engraving process can be tweaked in order to meet specific needs. This optimization can reduce directionality of reflected light and the thermal influence of the local heating generated by laser beam. In particular, it is an objective to provide a laser ablation machine, in which the method is implemented.

According to the present invention, these objectives are achieved through the features of independent claims. In addition, further advantageous embodiments follow from the dependent claims and the description.

In the present invention, a method for machining a workpiece by laser ablation, in particular for engraving a texture on a surface of the workpiece is applied. The surface of the workpiece includes at least one patch and the laser beam is controlled by a controller to ablate each patch line by line. The ablating order of the lines is selectable.

Therefore, the method comprises defining the sequence of ablation of the lines and determining the toolpath for ablation based on the defined sequence. This means the ablating order is designed such that the chronological order of the ablation of the lines are independent on the positional order of the lines.

In a preferred variant, the ablating order is design such that two lines, which are ablated successively in time domain are not in a neighboring position. It is advantageous to reduce the thermal influence between two lines positional closely. Moreover, the directionality of reflected light can be reduced. Ablating the lines with different sequences has the advantage of creating different visual effects on the engraved surface. In the case of engraving a line using consecutively neighboring dots, when a laser pulse/dot blasts a crater in the material, it always overlaps with previous dot on one side, and new material on the other. This creates an asymmetric, yet consistent surface pattern in the bottom of the line. The same happens when a surface is engraved by a succession of laser lines neighboring each other in both position and time domain. This consistent pattern will cause light to reflect in a preferred direction.

Modifying the order of engraving will break this position and time relation, namely, two consequently engraved aren't any more spatially neighboring and with it the consistency of the resulting surface pattern. The preferred directions of light reflection will also be blurred proportionally to the randomization of engraving order.

Depending on the applications, the order of lines to be ablated is selected in a random manner.

Apart from the ablating order of the lines, which can be defined, the ablating order of patches is designed such that the chronological order of the ablation of the patches are independent on the positional order of the patches.

Preferably, the ablating order is designed such that two patches ablated successively in time domain are not in a neighboring position.

In a further embodiment, the patches are ablated in a random order.

In these days the requirements of engraving is increasing. A high quality of the engraved workpiece is desired even if the complexity of the pattern to be engraved in the workpiece is increasing. If, as required for most applications, a 3-dimensional pattern must be engraved in the workpiece, the workpiece comprises a plurality of layers and the ablating is conducted layer by layer. Each layer includes at least one patch and the ablating order of the layers is a combination of top-to-bottom and bottom-to-top. There are two basic variants to define the order of the ablating layers: top-to-bottom and bottom-to-top. These two arrows in broken lines show these two variants.

Since the depth of the ablating is limited, for engraving complex textures having a large depth, the workpiece is divided into a plurality of layers, each layer comprises the surface to be machined. The depth of ablation of material is typically in the range of 1 to 5 µm. It is technically possible to perform the ablation deeper than this range, but deeper ablation will cause quality reduction. Therefore, the workpiece is divided into a plurality of layers, each layer has a defined thickness. The ablation is then performed layer by layer.

In known method, the layers are ablated in a sequent order. This order can be either from the top of the texture/cavity towards the bottom of it, or the opposite direction, this is already well known in state-of-the-art. In the present invention, these two sequence orders can be mixed in selectable proportion, to compromise between the benefits and drawbacks of each independent engraving order. Therefore, at least two layers are assigned for each a layer-identifying information, which is used to define the sequence of ablation of the layer.

In the top-down engraving a large amount of debris can be generated and collected in the area where it has been engraved. The bottom-up engraving prevents the debris from collecting in the engraved area, however has the drawback of the shape of the engraved surface is round. Therefore, the preferred embodiment can benefit from the advantages of both options, because both ways of engraving can be mixed in custom proportion to use the compromise that will produce the result that is closest to the expectations.

In a preferred embodiment, line-identifying data and patch-identifying data are used to define the sequence of ablation of the lines and the patches, respectively. This allows the ablation of the lines and patches in a variety of different sequences. The flexibility of changing the sequences of the ablation can reduce the thermal influences by ablation and the light reflected from the ablated surface can be directed in a specific way.

In order to allow the sequence of the ablation of the patches to be changed, at least two patches are assigned for each a patch-identifying data. The patch-identifying information is used to define the sequence of ablation of the patch.

The patch may comprises different elements such as a dot or a line. The basic element is a line made of a collection of laser impacts, a slice made of a collection of laser lines that can have a straight and/or a curved shape, or a volume made of a collection of slices that can be plane and/or curved surfaces.

In the present invention, a control unit is configured to perform the method of the present invention.

In the present invention, a machine for machining a workpiece by laser ablation comprises a laser head to emitting a laser beam and the control unit.

### BRIEF DESCRIPTION OF THE DRAWINGS

In order to describe the manner in which advantages and features of the disclosure can be obtained, in the following a more particular description of the principles briefly described above will be rendered by reference to specific embodiments thereof which are illustrated in the appended drawings. These drawings depict only exemplary embodiments of the disclosure and are not therefore to be considered to be limiting of its scope. The principles of the disclosure are described and explained with additional specificity and detail through the use of the accompanying drawings in which:
- Fig. 1: illustrates a simplified schematic of the principle of the laser ablation;
- Fig. 2: illustrates a schematic of ablating one patch;
- Fig. 3: illustrates an embodiment of ablating lines;
- Fig.4: illustrates another embodiment of ablating lines;
- Fig. 5: illustrates one embodiment of ablating patches; and
- Fig. 6: illustrates one embodiment of ablating layers.

### EXEMPLARY EMBODIMENTS

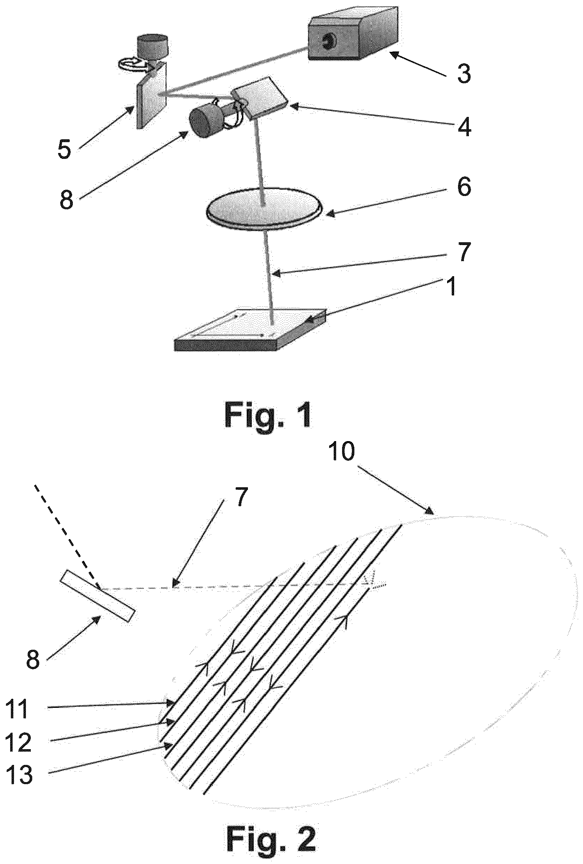

Figure 1 illustrates a schematic of principle of laser ablation. A laser source integrated in a laser head 3 emits a laser beam 7, which is deflected by an X-axis mirror 4 and a Y-axis mirror 5 and passes through an F-theta lens or a lens 6 with dynamic field correction till it reaches the workpiece surface 1. The optical setup allows moving the laser beam on a plane with a surface corresponding to the selected focal length.

For engraving/texturing of a workpiece surface it is necessary to divide the workpiece surface into a plurality of defined areas called patches. Figure 2 shows the schematic of engraving one patch 10. The laser head emits laser beam 7 which is deflected at mirrors of a galvanometer 8 and the deflected laser beam reaches the patch 10 of the workpiece surface. When the laser beam hits the surface, the material of the surface is ablated. In the known method, the lines within the patch are ablated in a consecutive order, namely in the order of 11, 12 and 13, respectively. In the present invention, the order of the lines to be ablated is selectable.

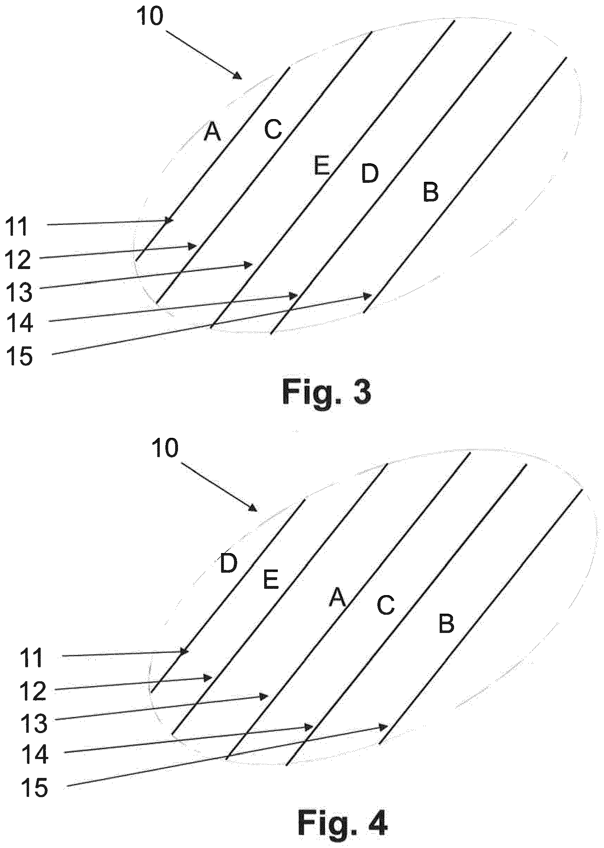

In the embodiment illustrated in figure 3, the lines are not ablated in the conventional order but in the order of A, B, C, D and E. The first line 11 is ablated, then the last line 15 is ablated, after ablating the last line 15, the second line 12 positioned neighboring the first line is ablated, after the ablating this line, the fourth line 14 positioned neighboring the last line 15 is ablated. The line 13 positioned in the middle of the lines is the last line to be ablated within this patch. The chronological order of the lines is independent on the position of the lines. The lines 11 and 15 ablated successively in time domain are not in a neighboring position, since the other lines 11, 13 and 14 are positioned between the lines 11 and 15.

Figure 4 shows another embodiment of the invention, in which the ablation order of the lines is not selected based on a fixed pattern, but in a random manner. This figure merely illustrates one variant and the order is not limited to this variant. The lines 11, 12, 13, 14 and 15 positioned in the subsequent manner are ablated in the order of A, B, C, D and E. The line 13 in the middle is first ablated and the ablation is continued at the last line 15. After the ablation of the last line 15, the fourth line 14 is ablated. The first line 11 is ablated after the ablation of the fourth line 14. The second line 12 is the last line to be ablated within this patch.

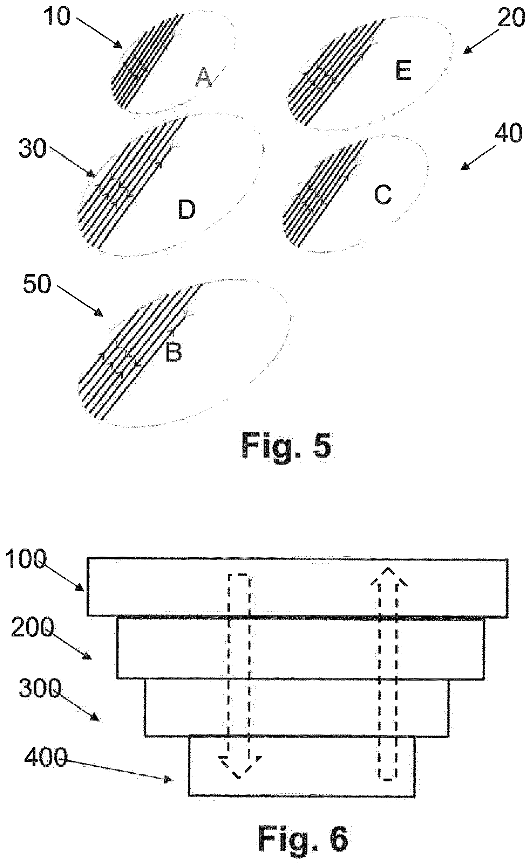

Figure 5 shows another embodiment, in which order of patches to be ablated is selectable. The variation of the order of lines to be ablated illustrated in the figures 2 and 3 can be implemented in different patches. For example, for the ablation of the first patch 10 the order shown in figure 2 can be used whereas for the ablation of the last patch 50 the order shown in figure 3 can be applied. In the known method, the patches are ablated in a subsequent order. In the present invention, the order of the patches are designed to be selectable. Figure 5 illustrates five patches to be ablated in the order of A, B, C, D and E. The first patch 10 is ablated first, and the last patch 50 is ablated subsequently. After the ablation of the fourth patch 40, the third patch 30 is ablated. The second patch 20 is the last patch to be ablated. Again the chronological order of the ablating patches are independent on the position of the patches. Two patches 10 and 30 are in a neighboring position but the ablating of patch 10 is followed first by the ablating of patches 50 and 40 not by ablating patch 30.

In the present invention, the order of the layers to be ablated can be selected. There are two basic variants to define the order of the ablating layers: top-to-bottom and bottom-to-top. These two arrows in broken lines show these two variants. The top-to-bottom variant defines the order of ablating layers in the following order: 100, 200, 300 and 400. The area of engraving is always reducing from one layer to the next, creating portions of surface where the recast material of remaining engraving process can build up. The bottom-to-top variant defines the order of ablating layers in the following order: 400, 300, 200 and 100. The area of engraving is always increasing from one layer to the next, constantly re-machining the entire surface and removing any recast build-up. His way direction of machining has a strong tendency to round and blur the texture details. In the present invention, a combination of these two variants is applied. Both ways of engraving can be mixed in custom proportion to use the compromise between them that will produce the result that is closest to the expectations.

### LIST OF REFERENCES

- 1: surface of workpiece
- 2: laser head
- 3: laser source
- 4: X-axis mirror
- 5: Y-axis mirror
- 6: lens
- 7: laser beam
- 8: galvanometer
- 11, 12, 13, 14, 15: line
- 10, 20, 30, 40, 50: patch
- 100, 200, 300, 400: layer

## Claims

1. A method for machining a workpiece by laser ablation, in particular for engraving a texture on a surface of the workpiece, the surface of the workpiece including at least one patch and the laser beam being controlled by a controller to ablate the patch line by line, **characterized in that** the ablating order of the lines is selectable.

2. The method according to claim 1, wherein the ablating order is designed such that the chronological order of the ablation of the lines are independent on the positional order of the lines.

3. The method according to claim 2, wherein the ablating order is designed such that two lines which are ablated successively in time domain time are not in a neighboring position.

4. The method according to one of the previous claims, wherein the order of lines to be ablated is selected in a random manner.

5. The method according to the previous claims, wherein the ablating order is design such that the chronological order of the ablation of the patches are independent on the positional order of the patches.

6. The method according to one of the previous claims, wherein the ablating order is designed such that two patches ablated successively in time domain are not in a neighboring position.

7. The method according to one of the previous claims, wherein the patches are ablated in a random order.

8. The method according to one of the previous claims, wherein the workpiece comprises a plurality layers, each layer including at least one patch and the ablating order of the layers is a combination of top-to-bottom and bottom-to-top.

9. The method according to one of the previous claims, wherein each of the line is assigned to a line-identifying data and the controller is configured to control the laser beam by using the line-identifying information.

10. The method according to one of the previous claims, wherein each of patch is assigned to a patch-identifying data and the controller is configured to control the laser beam by using the patch-identifying information.

11. The method according to one of the claims 8 to 10, wherein each of the layer is assigned to a layer-identifying data and the controller is configured to control the laser beam by using the layer-identifying information.

12. The method according to one of the previous claims, wherein the lines have a straight and/or curved shape.

13. A controller configured to perform the method according to one of the claims 1-12.

14. A machine for machining a workpiece by laser ablation comprising a laser head to emitting a laser beam and the controller according to claim 13.
